# EUROPEAN PATENT APPLICATION

(11) **EP 2 042 991 A1**
(43) Date of publication of application: **01.04.2009**
(21) Application number: 07018796.8
(22) Date of filing: 25.09.2007
(51) Int. Cl.: G06F 11/00

(54) **Method of detecting abnormal use of a non volatile memory**

(71) Applicant: GEMALTO Pte Ltd, Singapore 139941 (SG)
(72) Inventor: Chen, Lichao, 04-446 Singapore (SG); Ng, Uen Jye, 520711 Singapore (SG); Uy, Mark Julius, 140109 Singapore (SG)
(74) Representative: Brun, Philippe Alexandre Georges

(57) **Abstract**

The invention is a method of detecting abnormal use of a first non volatile memory embedded in an electronic token having a microprocessor and a second memory. Said second memory comprises a software intended to be executed by the microprocessor. Said first non volatile memory is defined by a set of address. The method comprises the steps of
- getting a first time data,
- detecting a programming operation in the first non volatile memory,
- identifying the software currently executed as being the current software,
- identifying the programmed address targeted by said programming operation,
- incrementing a counter associated to the programmed address,
- getting a second time data,
- computing an address programming frequency threshold based on first and second time data,
- according to the result of a comparison of said counter with the address programming frequency threshold, identifying the current software as a bad software.

## Description

### (Field of the invention)

The present invention relates to methods of detecting abnormal use of a non volatile memory. It relates particularly to methods of detecting abnormal use of a non volatile memory embedded in electronic token.

### (Prior art)

Most of the electronic tokens comprise at least a non volatile memory of EEPROM and/or Flash type. The manufacturers of memory know that whatever the technology of the non volatile memories, there is a maximum number N of possible read-write operations for each cell constituting a memory. Beyond this number N, there is a high risk of alteration or loss or data intended to be stored in memory. Indeed, it is considered that a memory is worn out when the number of programming/erasing operations has reached this number N. Thus the memory lifecycle is limited. For a Flash memory, this maximum number N is typically equal to 100,000.

Several methods of memory management are known according to the prior art for optimizing the memory use duration.

In a first type of known memory management, a given data is successively written in different physical cells. This solution allows distributing programming access to a given data on several cells. This solution avoids the stress of a cell when a given data is often written.

In a second type of known memory management, a retry counter is used in order to track failure of cell access. A retry counter is incremented when a programming operation must be carried out through several identical programming operations. A retry is generally performed when the cell lifecycle is close to the limit and the cell becomes unstable. When the retry counter reaches a predefined value the corresponding cell may be considered as worn and marked as unavailable.

However known methods of memory management do not allow avoiding an application to overstress a non volatile memory abnormally.

### (Summary of the Invention)

The invention aims at detecting an application which performs abnormal use of a non volatile memory embedded in an electronic token.

The object of the present invention is a method of detecting abnormal use of a first non volatile memory embedded in an electronic token. Said electronic token has a microprocessor and a second memory comprising at least a software intended to be executed by the microprocessor. Said first non volatile memory is defined by a set of address. Said method comprises the following steps of
e) getting a first time data,
a) detecting a programming operation in the first non volatile memory,
b) identifying the software currently executed by the microprocessor as being the current software,
c) identifying the programmed address targeted by said programming operation,
d) incrementing a counter associated to the programmed address,
f) getting a second time data,
g) computing an address programming frequency threshold based on first and second time data,
h) according to the result of a comparison of said counter with the address programming frequency threshold, identifying the current software as a bad software.
   Advantageously, the steps 6), 7) and 8) may be performed only if a predefined event occurred.
   The electronic token may be connected to a host machine and the predefined event may be a predefined number of commands received from the host machine.
   The electronic token may be a smart card and the predefined event may be a predefined number of Status command received from the host machine.
   The predefined event may be a predefined timer duration.
   Advantageously, the first non volatile memory maybe either of EEPROM or Flash type, and the computing step g) may based on the features of said first non volatile memory.
   The method may comprise the further step of locking and/or stopping and/or deleting the current software identified as a bad software.
   Advantageously, the method may comprise the further steps executed before step a):
j) getting a third time data,
k) detecting a programming operation in the first non volatile memory,
1) identifying the software currently executed by the microprocessor as being the current software,
m) incrementing a second counter associated to the current software,
n) getting a fourth time data,
o) computing a software programming frequency threshold based on third and fourth time data,
p) according to the result of a comparison of said second counter with the software programming frequency threshold, identifying the current software as a potential bad software.

Alternatively, the steps n), o) and p) may be performed only if a second predefined event occurred.

Advantageously, the electronic token may be connected to a host machine and the second predefined event may be a predefined number of commands received from the host machine.

The electronic token may be a smart card and the second predefined event may be is a predefined number of Status command received from the host machine.

The electronic token may be a portable audio device, a mobile handset, a personal digital assistant or a USB token.

Another object of the invention is an electronic token containing a microprocessor, a first non volatile memory defined by a set of address, a second memory comprising at least a software intended to be executed by the microprocessor, means for detecting a programming operation in the first non volatile memory, means for identifying the software currently executed by the microprocessor as being the current software, means for identifying the programmed address targeted by said programming operation, and means for incrementing a counter associated to the programmed address.

Said means are able to get first and second time data, to compute an address programming frequency threshold based on first and second time data, to compare said counter with the address programming frequency threshold and if said counter exceeds or reaches the address programming frequency threshold, then to identify the current software as a software which abnormally uses the first non volatile memory.

Advantageously, the means may wait for a predefined event before getting the second time data, before computing the address programming frequency threshold, and before comparing the counter associated to the programmed address with the address programming frequency threshold.

The electronic token may be a smart card, a portable audio device, a mobile handset, a personal digital assistant or a USB token.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically the architecture of an electronic token of smart card type according to the invention;
- Figure 2 is an example of algorithm for detecting applications which performs abnormal use of a memory according to the invention;
- Figure 3 is an example of algorithm for detecting applications which should be tracked for an abnormal use of a memory according to the invention; and
- Figure 4 depicts an example of tracking array used for storing data managed by the invention.

### (Detailed description of the preferred embodiments)

The invention may apply to any types of electronic token comprising at least one non volatile memory. The invention may apply to any storage devices with limited lifespan like a hard disk for example. In this specification, the electronic token is a SIM card but it could be any other kind of smart card or a portable audio device, a mobile handset, a personal digital assistant or a USB token. An advantage of the invention is to allow early detection of applications which perform abnormal use of a non volatile memory embedded in an electronic token. The invention allows the detection of bad applications in a short time, without waiting for a large number of memory programming operations. Thus the invention allows preserving the lifespan of the memory and the lifespan of the token containing the memory. The invention allows the electronic token to quickly react before the memory is actually damaged.

Another advantage of the invention is to improve the security of the electronic token by detecting malicious applications that overstress the memory. The invention is also well suited for detecting badly designed applications that overstress the memory.

The invention may apply to every types of software executed in the electronic token. In particular, it may apply to every type of embedded applications. The invention may apply to softwares executed outside the electronic token and accessing a non volatile memory embedded in the electronic token.

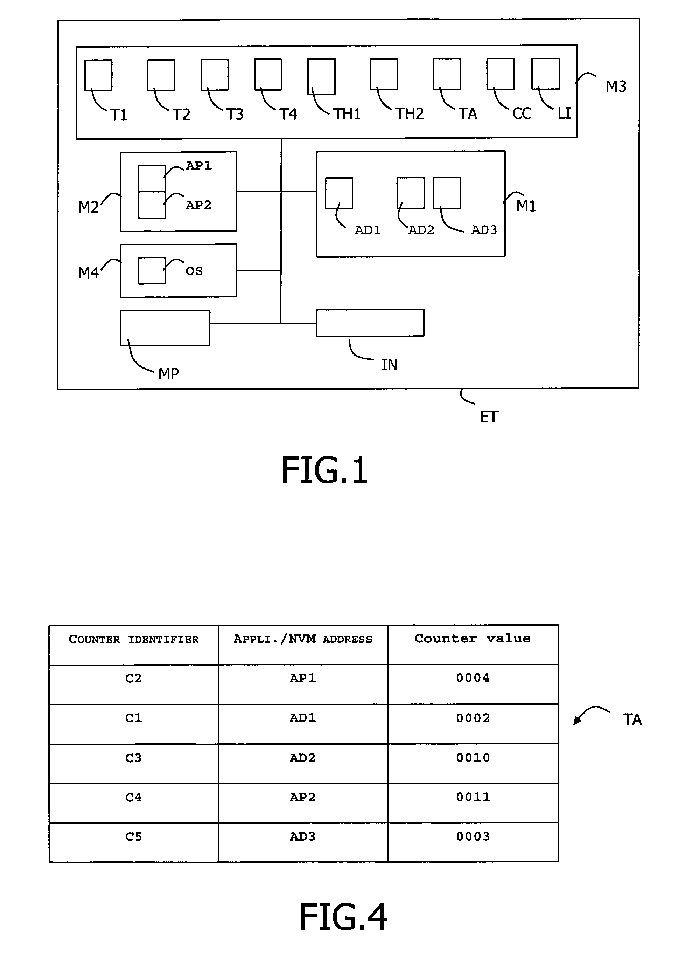

Figure 1 shows the architecture of a SIM card as an example of an electronic token according to a preferred embodiment of the invention. The SIM card ET contains a microprocessor MP, a communication interface IN, a first non volatile memory M1, a second memory M2, a third working memory M3 and a fourth memory M4. The second memory M2 is a non volatile memory like EEPROM or Flash memory. The second memory M2 contains at least one software application AP1. The third working memory M3 is a RAM memory and may contain temporary data. The fourth memory M4 may a non volatile memory like EEPROM or Flash memory. The fourth memory M4 contains an operating system OS. The first memory M1 may be an EEPROM or Flash memory. The first memory M1 is intended to store data used by the software application AP1.

The microprocessor MP cooperates with the working memory M3 and is intended to run the operating system OS and the software application AP1. When the software application AP1 has been developed in an interpreted language such as Java, a virtual machine may be contained in the fourth memory M4. In this case, is the microprocessor MP cooperates with the working memory M3 and is intended to run both the operating system OS, the virtual machine and the software application AP1.

The smart card is connected to a terminal such as a card reader or a mobile radiotelephone terminal by a communication link with or without electrical contacts.

The three memories M1, M2, M4 may consist of a unique circuit or several circuits that may be of different types. In particular, memories M2 and M4 may be merged in a unique memory containing operating system, applets and a virtual machine.

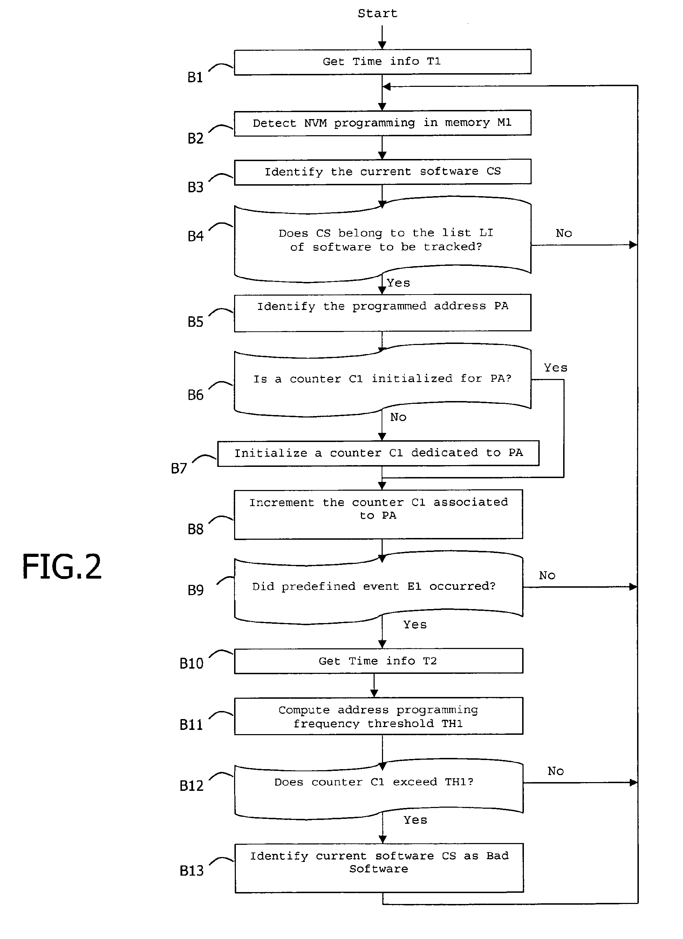

Figure 2 shows an algorithm for detecting abnormal use of the first non volatile memory M1. After the SIM card initialization done by a connected mobile phone ME, a first time data T1 is retrieved by the card during a first step B1.

Alternatively the first time data T1 may be retrieved during the SIM card initialization.

The SIM card may send a proactive command such as Provide Local Information command in order to get the time data T1 from the connected mobile phone ME.

Alternatively the electronic token may have an internal autonomous clock that provides the first time data T1.

Then the microprocessor MP starts the execution of a software application AP1. From this point, dedicated means of the card tracks access to the first non volatile memory M1. When a data must be written in memory M1, the programming operation in memory M1 is detected at step B2.

Then means of the SIM card identifies the current software CS during a step B3. The current software CS is the software application which is under execution and which generated the detected programming operation in memory M1. At this time, the current software CS is the application AP1. A specific data may be stored in the working memory M3 for identifying the found current software.

At step B5, means of the SIM card identifies the programmed address PA. The programmed address PA corresponds to the physical address of memory M1 where the detected programming operation must be carried out.

Then a counter C1 associated to the programmed address PA is incremented at step B8 in order to track the number of programming operation performed at address PA.

Advantageously, before step B8, a check of counter C1 existence is performed at step B6. If no counter associated to the programmed address PA exists then a new counter C1 is created and initialized to zero at step B7. The counter C1 may be stored in the working memory M3.

A second time data T2 is retrieved by the card during a first step B10.

Then an address programming frequency threshold TH1 is dynamically computed in the SIM card at step B11. The threshold TH1 is computed on the basis of first and second time data T1 and T2. In a preferred embodiment, the threshold TH1 is computed on the basis of T1, T2 and the type of memory M1 for a given period of time. The threshold TH1 may be computed according to the formula: number of maximum cycles / (number of expected years for M1 lifespan * 365 * (T2 - T1))

In the following example the memory M1 is a Flash memory with a 100,000 erase/write lifespan and the memory M1 is assumed to last for at least two years. If the duration between T1 and T2 is equal to 2 hours, then the computed threshold TH1 should be equal to 100,000 cycles / (2 years * 365 days * 12) = 11.

In another example the memory M1 is an EEPROM memory with a 500,000 erase/write lifespan and the memory M1 is assumed to last for at least three years. If the duration between T1 and T2 is equal to 10 hours, then the computed threshold TH1 should be equal to 500,000 cycles / (3 years * 365 days * 2,4) = 190.

At step B12, a comparison is performed between the computed address programming frequency threshold TH1 and the counter C1 associated to the programmed address PA.

If the counter C1 exceeds or reaches the computed threshold TH1, then the current software CS is identified as bad software at step B13. In other words, the current application AP1 is considered as generating an abnormal use of the non volatile memory M1. Means of electronic token may then perform a relevant action such as stopping the application AP1, locking the application AP1, or deleting the application AP1.

The application AP1 may be marked as bad or included in a list of bad application.

Advantageously, means of the SIM card may manage a list of software to be tracked. Thus after step B3, a check may be performed during step B4 in order to verify if the identified current software CS belongs to the list of software to be tracked. If the current software CS does belong to a list LI of software to be tracked then the successive steps described above are executed. If the current software CS does not belong to the list LI of software to be tracked then means of the SIM card wait for a new programming operation in memory M1.

Advantageously, detection of programming operation may be extended to several memories contained in the electronic token.

Advantageously, before step B10, a check is performed for detecting the occurrence of a predefined event E1 during a step B9. If the event E1 did occur then the successive steps described above are executed. If the event E1 did not occur then means of the SIM card wait for a new programming operation in memory M1

The event E1 may be set as a predefined number of commands received by the electronic. In this case a counter CC of received command is managed by the electronic token. The counter CC may be stored in the working memory M3. For example the event E1 may be set as the number of Status command received by the SIM card. For example a number NUM of maximum Status command may be pre-set to 720 assuming a Status command is received every 10 seconds interval during 2 hours or a Status command is received every 50 seconds interval during 10 hours. Thus the event E1 occurs when the counter CC of received Status command reaches the computed number NUM.

Alternatively, the event E1 may be set as a predefined timer duration.

An advantage of the invention is to allow the tuning of the computing of the address programming frequency threshold TH1 or the predefined event E1 in order to take software application features and memories features and token features into account.

Advantageously, an additional sequence of steps may be performed before step B2.

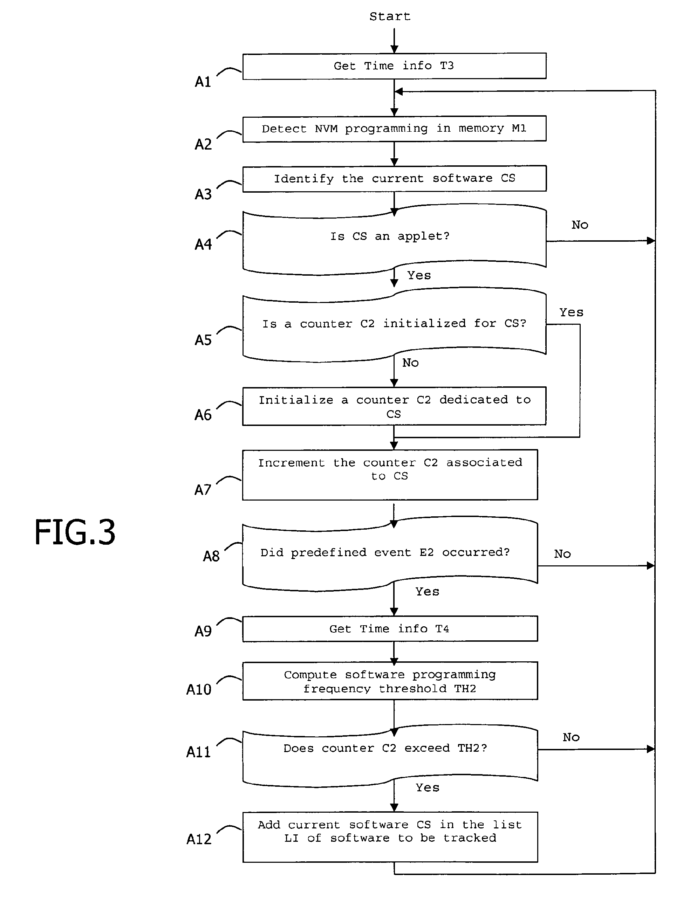

Figure 3 shows a method for identifying software application that need to be tracked according to the previously described sequence of steps. This identifying method allows focusing the tracking of abnormal use of memory on a subset of the softwares embedded in the electronic token.

After the SIM card initialization done by a connected mobile phone ME, a third time data T3 is retrieved by the card during a step A1.

The third time data T3 may be retrieved by the SIM card by using the same way as the first time data T1: using a proactive command or an internal autonomous clock.

Alternatively the first time data T1 may be used as third time data T3. In this case, execution of step A1 corresponds to the step B1 execution.

Then the microprocessor MP starts the execution of a software application AP1. From this point, dedicated means of the card tracks access to the first non volatile memory M1. When a data must be written in memory M1, the programming operation in memory M1 is detected at step A2.

Then means of the SIM card identifies the current software CS during a step A3. The current software CS is the software application which is under execution and which generated the detected programming operation in memory M1. At this time, the current software CS is the application AP1. A specific data may be stored in the working memory M3 for identifying the found current software.

Then a counter C2 associated to the current software CS is incremented at step A7 in order to track the number of programming operation performed by the software application AP1.

Advantageously, before step A7, a check of counter C2 existence is performed at step A5. If no counter associated to the current software CS exists then a new counter C2 is created and initialized to zero at step A6. The counter C2 may be stored in the working memory M3.

A fourth time data T4 is retrieved by the card during a first step A9.

Then a software programming frequency threshold TH2 is dynamically computed in the SIM card at step A10. The threshold TH2 is computed on the basis of third and fourth time data T3 and T4. In a preferred embodiment, the threshold TH2 is computed on the basis of T3, T4 and the type of memory M1. The threshold TH2 may be computed according to the same formula as threshold TH1.

At step A11, a comparison is performed between the computed software programming frequency threshold TH2 and the counter C2 associated to the current software CS.

If the counter C2 exceeds or reaches the computed threshold TH2, then the current software CS is identified as potential bad software at step A12. In other words, the current application AP1 is considered as a software that may generate an abnormal use of the non volatile memory M1. The current application AP1 may be added in a list LI of software to be tracked.

Alternatively, the current software application AP1 may be marked as potential bad or included in the list LI.

Advantageously, after step A3, a check may be performed during step A4 in order to verify if the identified current software CS is an applet. This check allows taking into account programming operations generated by applet only. If the current software CS is an applet then the successive steps described above are executed. If the current software CS is not an applet then means of the SIM card wait for a new programming operation in memory M1.

Advantageously, the step A2 of detection of programming operation may be extended to several memories contained in the electronic token.

Advantageously, before step A9, a check is performed for detecting the occurrence of a predefined event E2 during a step A8. If the event E2 did occur then the successive steps described above are executed. If the event E2 did not occur then means of the SIM card wait for a new programming operation in memory M1

The event E2 may be set and computed according to the same way as event E1.

Alternatively, the event E2 may be set as a predefined timer duration.

An advantage of the invention is to allow the tuning of the computing of the software programming frequency threshold TH2 or the predefined event E2 in order to take software application features and memories features and token features into account.

As shown in Figure 4, counter C1 associated to the programmed address PA and counter C2 associated to the current software CS may be stored in a unique tracking area TA. The tracking area TA may be stored in working memory M3. In a preferred embodiment the tracking area TA is table with multiple entries. Each entry is composed of 3 fields: a counter identifier, an application identifier/address and a counter value.

The counter identifier field may be 2 bytes long. The application identifier/address field may be 3 bytes long and the counter value field may be 2 bytes long.

In the example of figure 4, five counters have been created. C2 and C4 correspond to application counters. C1, C3 and C5 correspond to memory address counters. C2 is associated to the software application AP1. The software application AP1 has generated four programming operations in memory M1, and the software application AP2 has generated eleven programming operations. The memory address AD3 has been programmed three times.

Alternatively, the counter identifier field may be removed.

Alternatively, a memory identifier field may be managed in the tracking array. This additional field allows tracking programming operations in several memories at the same time.

An advantage of the invention is to allow a simple counter management for memory addresses that have been programmed. The unique counter is incremented for a given memory address independently of the software application which generates corresponding programming operation.

An additional advantage of the invention is to allow a fast convergence and high accuracy for detecting software application which use the memory in an abnormal way. This allows a fast generation of relevant counter-measures.

Alternatively, the list LI of software to be tracked, the counter CC of received Status command and the tracking array TA may be stored in a memory different from the working memory M3.

## Claims

1. A method of detecting abnormal use of a first non volatile memory (M1) embedded in an electronic token (ET), said electronic token (ET) having a microprocessor (MP) and a second memory (M2) comprising at least a software (AP1, AP2) intended to be executed by the microprocessor (MP), said first non volatile memory (M1) being defined by a set of address (AD1, AD2, AD3), said method comprises the following steps:
a) detecting (B2) a programming operation in the first non volatile memory (M1),
b) identifying (B3) the software currently executed by the microprocessor (MP) as being the current software (CS),
c) identifying (B5) the programmed address (AD1, AD2, AD3) targeted by said programming operation,
d) incrementing (B8) a counter (C1) associated to the programmed address (AD1, AD2, AD3),
**characterized in that** said method comprises the further steps:
e) getting (B1) a first time data (T1),
f) getting (B10) a second time data (T2),
g) computing (B11) an address programming frequency threshold (TH1) based on first and second time data (T1, T2),
h) according to the result of a comparison of said counter (C1) with the address programming frequency threshold (TH1), identifying (B13) the current software (CS) as a bad software.

2. The method according to claim 1, wherein the steps f), g) and h) are performed only if a predefined event (E1) occurred.

3. The method according to claim 2, wherein said electronic token (ET) is connected to a host machine and wherein the predefined event (E1) is a predefined number of command received from the host machine.

4. The method according to claim 3, wherein said electronic token (ET) is a smart card and wherein the predefined event (E1) is a predefined number of Status command received from the host machine.

5. The method according to claim 2, wherein the predefined event (E1) is a predefined timer duration.

6. The method according to one of the previous claims, wherein the first non volatile memory (M1) is either of EEPROM or Flash type, and wherein the computing step g) is based on the features of said first non volatile memory (M1).

7. The method according to one of the previous claims, wherein said method comprises the further step:
i)the current software (CS) identified as a bad software is locked and/or stopped and/or deleted.

8. The method according to one of the previous claims, wherein said method comprises the further steps executed before step a):
j) getting (A1) a third time data (T3),
k) detecting (A2) a programming operation in the first non volatile memory (M1),
l) identifying (A3) the software currently executed by the microprocessor (MP) as being the current software (CS),
m) incrementing (A7) a second counter (C2) associated to the current software (CS),
n) getting (A9) a fourth time data (T4),
o) computing (A10) a software programming frequency threshold (TH2) based on third and fourth time data (T3, T4),
p) according to the result of a comparison of said second counter (C2) with the software programming frequency threshold (TH2), identifying (A12) the current software (CS) as a potential bad software.

9. The method according to claim 8, wherein the steps n), o) and p) are performed only if a second predefined event (E2) occurred.

10. The method according to claim 9, wherein said electronic token (ET) is connected to a host machine and wherein the second predefined event (E2) is a predefined number of command received from the host machine.

11. The method according to claim 10, wherein said electronic token (ET) is a smart card and wherein the second predefined event (E2) is a predefined number of Status command received from the host machine.

12. The method according to claim 8, 9 or 10, wherein the electronic token (ET) is a portable audio device, a mobile handset, a personal digital assistant or a USB token.

13. An electronic token (ET) containing
- a microprocessor (MP),
- a first non volatile memory (M1) defined by a set of address (AD1, AD2, AD3),
- a second memory (M2) comprising at least a software (AP1, AP2) intended to be executed by the microprocessor (MP),
- means for detecting (B2) a programming operation in the first non volatile memory (M1), for identifying (B3) the software currently executed by the microprocessor (MP) as being the current software (CS), for identifying (B5) the programmed address (AD1, AD2, AD3) targeted by said programming operation, for incrementing (B8) a counter (C1) associated to the programmed address (AD1, AD2, AD3), said electronic token (ET) being **characterized in that** said means are able to get (B1) a first time data (T2), to get (B10) a second time data (T2), to compute (B11) an address programming frequency threshold (TH1) based on first and second time data (T1, T2), to compare (B12) said counter (C1) with the address programming frequency threshold (TH1) and if said counter (C1) exceeds or reaches the address programming frequency threshold (TH1), then to identify (B13) the current software (CS) as a software which abnormally uses the first non volatile memory (M1).

14. An electronic token (ET) according to claim 13, wherein said means wait for a predefined event (E1) before getting (B10) the second time data (T2), computing (B11) the address programming frequency threshold (TH1), and comparing the counter (C1) associated to the programmed address (AD1, AD2, AD3) with the address programming frequency threshold (TH1).

15. An electronic token (ET) according to claim 13 or 14, **characterized in that** the token is a smart card, a portable audio device, a mobile handset, a personal digital assistant or a USB token.
